# EUROPÄISCHE PATENTSCHRIFT

(11) **EP 2 738 631 B1**
(45) Veröffentlichungstag und Bekanntmachung des Hinweises auf die Patenterteilung: **14.08.2019**
(21) Anmeldenummer: 13192215.5
(22) Anmeldetag: 08.11.2013
(51) Int. Cl.: G05B 19/042

(54) **Verfahren zum Betreiben mindestens einer Maschine**
Method for operating at least one machine
Procédé de fonctionnement d'au moins une machine

(30) Priorität: 28.11.2012 DE 102012023182
(43) Veröffentlichungstag der Anmeldung: 04.06.2014
(73) Patentinhaber: SCHNEIDER ELECTRIC AUTOMATION GMBH, 97828 Marktheidenfeld (DE)
(72) Erfinder: Saloga, Bastian, 77933 Lahr (DE); Kupfer, Thomas, 77948 Friesenheim-Oberschopfheim (DE); Almin, Jerome, 27230 Saint Aubin de Scellon (FR); Defaix, Olivier, 78000 Versailles (FR)
(74) Vertreter: Huwer, Andreas

(56) Entgegenhaltungen:
- EP-A1- 1 857 897
- DE-A1-102010 062 908

## Beschreibung

Die Erfindung betrifft ein Verfahren zum Betreiben mindestens einer Maschine, die mittels einer Steuereinrichtung ansteuerbar und in mindestens einen sicheren und wenigstens einen unsicheren Betriebszustand bringbar ist, wobei für die Maschine eine Steuereinrichtung bereitgestellt wird, die wenigstens einen ersten Mikrocomputer aufweist, der mindestens einen ersten Mikroprozessor und einen ersten Datenspeicher umfasst, in dem Konfigurationsdaten ablegbar sind, die von einem auf dem ersten Mikrocomputer ablaufenden, zur Ansteuerung der Maschine dienenden Betriebsprogramm verwendet werden.

Bei einem derartigen, aus der Praxis bekannten Verfahren ist die Maschine ein Elektromotor, der mit der Steuereinrichtung zu einem elektrischen Antrieb zusammengefasst ist. Die Steuereinrichtung weist einen ersten Mikrocomputer auf, der mindestens einen ersten Mikroprozessor und einen ersten Datenspeicher umfasst. In dem Datenspeicher ist ein auf dem ersten Mikroprozessor ausführbares Betriebsprogramm abgelegt, mittels dem der Elektromotor steuerbar ist.

Mit Hilfe des Betriebsprogramms kann der Elektromotor in einen sicheren Betriebszustand und einen unsicheren Betriebszustand gebracht werden. In dem sicheren Betriebszustand wird die Stromzufuhr zum Elektromotor gesperrt, so dass dieser kein Drehmoment erzeugt. Im unsicheren Betriebszustand wird die Wicklung des Elektromotors bestromt, um ein Antriebsmoment zu erzeugen. Das Betriebsprogramm ist derart ausgestaltet, dass sich der Elektromotor bei der Erstinbetriebnahme im sicheren Betriebszustand befindet, wobei der Wechsel in den unsicheren Zustand zunächst gesperrt ist.

Damit der elektrische Antrieb von seinem Benutzer an eine für den Antrieb vorgesehene Anwendung angepasst werden kann, sind im ersten Datenspeicher Konfigurationsdaten abgelegt, welche die Ausführung des Betriebsprogramms beeinflussen.

Damit der Benutzer die Konfigurationsdaten erstellen und/oder bei Bedarf verändern kann, wird ein zweiter Mikrocomputer bereitgestellt, der einen zweiten Mikroprozessor und einen zweiten Datenspeicher aufweist. Der zweite Mikrocomputer ist mit einer Eingabeeinrichtung und einer Anzeigeeinrichtung, wie z.B. einem Bildschirm verbunden. Der zweite Mikrocomputer kann beispielsweise mit der Eingabe- und der Anzeigeeinrichtung in ein Laptop integriert sein.

In dem zweiten Datenspeicher ist ein auf dem zweiten Mikroprozessor ausführbares Konfigurationsprogramm abgelegt, mit dessen Hilfe der Benutzer die Konfigurationsdaten erzeugen, anzeigen und im zweiten Datenspeicher abgelegen kann. Wenn die Konfigurationsdaten erstellt sind, wird der zweite Mikrocomputer über eine Point-zu-Point Verbindung mit dem ersten Mikrocomputer verbunden, um die Konfigurationsdaten aus dem zweiten Datenspeicher in den ersten Datenspeicher zu übertragen. Wenn alle Konfigurationsdaten fehlerfrei übertragen wurden, wird die Point-zu-Point Verbindung entfernt. Die Steuereinrichtung kann nun in den unsicheren Betriebszustand gebracht werden, um mit dem Elektromotor beispielsweise ein Antriebsmoment zu erzeugen. Dabei werden die Konfigurationsdaten für die Ansteuerung des Elektromotors verwendet.

Das Verfahren hat jedoch den Nachteil, dass der Benutzer zum Übertragen der Konfigurationsdaten in den elektrischen Antrieb mit dem zweiten Mikrocomputer zu dem Antrieb hingehen muss, um den zweiten Mikrocomputer über die Point-to-Point Verbindung mit dem Antrieb zu verbinden. Bei größeren Anlagen, die eine Vielzahl von elektrischen Antrieben aufweisen, die über einen gemeinsamen Feldbus an einer zentralen speicherprogrammierbaren Steuerung angeschlossen sind, kann dies jedoch mit einem nicht unerheblichen Aufwand verbunden sein, wenn die Antriebe nur schwer zugänglich sind. Dieses Problem besteht auch im Service-Fall, wenn ein defekter Antrieb gegen ein entsprechendes Ersatzteil ausgetauscht wurde und die Konfigurationsdaten danach in den Antrieb eingelesen werden müssen. Ungünstig ist außerdem, dass nach dem Austausch eines Antriebs der zweite Mikrocomputer benötigt wird, um den neuen Antrieb zu konfigurieren.

Ein ähnliches Verfahren ist aus DE 10 2010 062 908 A1 bekannt.

Es besteht deshalb die Aufgabe, ein Verfahren der eingangs genannten Art zu schaffen, bei dem die Steuereinrichtung auf einfache und sichere Weise mit den Konfigurationsdaten konfigurierbar ist.

Diese Aufgabe wird mit den Merkmalen des Anspruchs 1 gelöst.

In vorteilhafter Weise ermöglicht es dieses Verfahren, die Konfigurationsdaten über die Busverbindung mit hoher Übertragungssicherheit vom zweiten Mikrocomputer zum ersten Mikrocomputer zu übertragen. Somit kann der zweite Mikrocomputer beim Übertragen der Konfigurationsdaten in größerer Entfernung von der Steuereinrichtung der betreffenden Maschine angeordnet sein. Bei einer Anlage, bei der mehrere Maschinen am Bus angeschlossen sind, hat dies den Vorteil, dass die Konfigurationsdaten für die Steuereinrichtungen aller Maschinen vom selben Ort aus in die Mikrocomputer der einzelnen Steuereinrichtungen geladen werden können. Die Arbeitszeit für die Konfiguration der Steuereinrichtungen reduziert sich dadurch entsprechend. Da in der Steuereinrichtung der Maschine ein erster Prüfcode erzeugt, dann über die Busverbindung zum zweiten Mikrocomputer übertragen und dort auf Plausibilität überprüft wird, wird bei erfolgreicher Plausibilitätsprüfung davon ausgegangen, dass die Konfigurationsdaten unverfälscht zum zweiten Mikrocomputer gelangt sind.

Darüber hinaus kann durch das erfindungsgemäße Verfahren bei Anlagen, bei denen am Bus mehrere Steuereinrichtungen angeschlossen sind, auch sichergestellt werden, dass die Konfigurationsdaten nur dann zur Anwendung kommen können, wenn sie zu der richtigen Steuereinrichtung übertragen wurden. Bei Anlagen, bei denen für die einzelnen Steuereinrichtung unterschiedliche Konfigurationsdaten vorgesehen sind, wird dadurch ausgeschlossen, dass eine Steuereinrichtung mit Konfigurationsdaten betrieben wird, die für eine andere Steuereinrichtung vorgesehen sind. Erfindungsgemäß wird dies durch die Merkmale g), h) und β) ermöglicht. Der zweite Prüfcode kann nur vom ersten Mikrocomputer erzeugt werden, weil nur in dessen Datenspeicher das zweite Prüfcodeerzeugungsprogramm gespeichert ist. Nach Übertragung des zweiten Prüfcodes zum zweiten Mikrocomputer wird der zweite Prüfcode über die zweite Ausgabeeinrichtung ausgegeben. Zusätzlich wird der zweite Prüfcode über die am ersten Mikrocomputer angeschlossene erste Ausgabeeinrichtung ausgegeben. Die Ausgabeeinrichtungen können beispielsweise als optische Anzeigen ausgestaltet sein, an denen der Benutzer der Maschine den zweiten Prüfcode ablesen und auf Übereinstimmung mit dem an der jeweils anderen Anzeigeeinrichtung angezeigten zweiten Prüfcode vergleichen kann. Wenn an beiden Ausgabeeinrichtungen derselbe zweite Prüfcode ausgeben wird und es sich bei der Steuereinrichtung, an deren Ausgabeeinrichtung der zweite Prüfcode ausgegeben wird, um die richtige Steuereinrichtung handelt, betätigt der Benutzer die Eingabeeinrichtung der betreffenden Steuereinrichtung. Nur in diesem Fall wird das Freigabesignal erzeugt, bei dessen Vorliegen, die zuvor in den Datenspeicher der betreffenden Steuereinrichtung übertragenen Konfigurationsdaten zur Ansteuerung der Maschine verwendet werden.

Bei einer vorteilhaften Ausführungsform der Erfindung wird ein dritter Mikrocomputer bereitgestellt, der mindestens einen dritten Mikroprozessor und einen dritten Datenspeicher umfasst, wobei die Busverbindung einen den dritten Mikrocomputer mit dem ersten Mikrocomputer verbindenden ersten Bus und einen den dritten Mikrocomputer mit dem zweiten Mikrocomputer verbindenden zweiten Bus aufweist, wobei in Schritt e) aus Anspruch 1 die Konfigurationsdaten und der erste Prüfcode vom zweiten Mikrocomputer über den zweiten Bus zum dritten Mikrocomputer übertragen, im dritten Datenspeicher abgelegt und vom dritten Mikrocomputer über den ersten Bus zum ersten Mikrocomputer übertragen werden, wobei in Schritt h) aus Anspruch 1 der zweite Prüfcode vom ersten Mikrocomputer über den ersten Bus zum dritten Mikrocomputer übertragen, im dritten Datenspeicher abgelegt und vom dritten Mikrocomputer über den zweiten Bus zum zweiten Mikrocomputer übermittelt wird, und wobei der zweite Kontrollwert in Schritt i) vom zweiten Mikrocomputer über den zweiten Bus zurück zum dritten Mikrocomputer und über den ersten Bus vom dritten Mikrocomputer zurück zum ersten Mikrocomputer übertragen wird. Dabei kann der dritte Mikrocomputer eine speicherprogrammierbare Steuerung sein, über welche an die Steuereinrichtungen der am ersten Bus angeschlossenen Maschinen Kommandos übermittelt werden können, die von den Steuereinrichtungen ausgeführt werden.

Bei einer Ausgestaltung der Erfindung werden folgende weitere Verfahrensschritte durchgeführt:
a) die Steuereinrichtung wird gegen ein entsprechendes Ersatzteil ausgetauscht, das wenigstens einen vierten Mikrocomputer aufweist, der mindestens einen vierten Mikroprozessor und einen vierten Datenspeicher umfasst, wobei der vierte Mikrocomputer über eine vierte Übertragungsstrecke mit einer weiteren Eingabeeinrichtung und über eine fünfte Übertragungsstrecke -mit einer dritten Ausgabeeinrichtung verbunden ist,
b) es werden die Konfigurationsdaten sowie der erste und zweite Prüfcode vom dritten Mikrocomputer über den ersten Bus zum vierten Mikrocomputer übertragen und im vierten Datenspeicher abgelegt,
c) mit Hilfe eines auf dem vierten Mikrocomputer ablaufenden dritten Kontrollprogramms wird mittels der im vierten Datenspeicher abgelegten Konfigurationsdaten nach der ersten Prüfvorschrift ein dritter Kontrollwert für den ersten Prüfcode ermittelt und mit dem im vierten Datenspeicher abgelegten ersten Prüfcode auf Übereinstimmung verglichen,
d) mit Hilfe eines auf dem vierten Mikrocomputer ablaufenden vierten Prüfcodeerzeugungsprogramms wird nach der zweiten Prüfvorschrift aus den im vierten Datenspeicher abgelegten Konfigurationsdaten ein von dem ersten Prüfcode abweichender dritter Prüfcode erzeugt und vom vierten Mikrocomputer über die fünfte Übertragungsstrecke an die dritte Ausgabeeinrichtung übertragen und mittels dieser ausgegeben,
e) die im vierten Datenspeicher abgelegten Konfigurationsdaten werden nur dann in einem zur Ansteuerung der Maschine vorgesehenen, auf dem vierten Mikrocomputer ablaufenden Betriebsprogramm verwendet, wenn mittels der weiteren Eingabeeinrichtung ein Freigabesignal erzeugt und über die vierte Übertragungsstrecke zum vierten Mikroprozessor übertragen wird.

In vorteilhafter Weise ist es durch diese Verfahrensschritte möglich, nach dem Erneuern einer Steuereinrichtung die Konfigurationsdaten ohne die Verwendung des zweiten Mikrocomputers über den ersten Bus sicher in die neue Steuereinrichtung zu übertragen. Dabei wird bei Anlagen, bei denen am Bus mehrere Steuereinrichtungen angeschlossen sind, auch sichergestellt, dass die Konfigurationsdaten nur dann zur Anwendung kommen können, wenn sie zu der richtigen Steuereinrichtung übertragen wurden. Nachdem der dritte Prüfcode über die dritten Ausgabeeinrichtung ausgegeben wurde, kann der Benutzer der Maschine den dritten Prüfcode auf Richtigkeit überprüfen. Dies kann beispielsweise in der Weise erfolgen, dass der Benutzer den ausgegebenen dritten Prüfcode mit einem entsprechenden Referenzcode vergleicht. Den Referenzcode kann der Benutzer beispielsweise einer in gedruckter Form vorliegenden Tabelle entnehmen, die zu einem früheren Zeitpunkt erstellt wurde, beispielsweise in Verfahrensschritt h) von Anspruch 1. Wenn der an der dritten Ausgabeeinrichtung ausgegebene Prüfcode mit dem Referenzcode übereinstimmt, betätigt der Benutzer die Eingabeeinrichtung der neuen Steuereinrichtung, um das Freigabesignal zu erzeugen, bei dessen Vorliegen, die zuvor in den Datenspeicher der Steuereinrichtung übertragenen Konfigurationsdaten zur Ansteuerung der betreffenden Maschine verwendet bzw. für diese Verwendung freigegeben werden.

Bei einer bevorzugten Ausgestaltung der Erfindung sind über den ersten Bus mindestens zwei erste Mikrocomputer, die jeweils einer Steuereinrichtung einer Maschine zugeordnet sind, mit dem dritten Mikrocomputer verbunden, wobei in den ersten Datenspeichern dieser Steuereinrichtungen jeweils eine die betreffende Steuereinrichtung eindeutig identifizierende Kennung abgelegt ist, wobei die Kennungen vorzugsweise zyklisch über den ersten Bus zum dritten Mikrocomputer übertragen und mit im dritten Datenspeicher abgelegten Referenzwerte verglichen werden, wobei für den Fall, dass eine Kennung mit keinem der Referenzwerte übereinstimmt,
a) für die dieser Kennung zugeordnete Steuereinrichtung die Verfahrensschritte b) bis i) aus Anspruch 3 durchgeführt werden, und
b) die betreffende Kennung als zusätzlicher Referenzwert im dritten Datenspeicher abgelegt wird, wenn
   α) für diese Steuereinrichtung der dritte Kontrollwert mit dem im vierten Datenspeicher abgelegten ersten Prüfcode übereinstimmt und
   β) mittels der dieser Steuereinrichtung zugeordneten Eingabeeinrichtung ein Freigabesignal erzeugt und über die vierte Übertragungsstrecke zum vierten Mikroprozessor übertragen wird.

Eine neue an dem ersten Bus angeschlossene Steuereinrichtung kann somit automatisch erkannt werden und die für die Konfigurierung dieser Steuereinrichtung erforderlichen Schritte automatisch gestartet werden.

Vorteilhaft ist, wenn die Maschine nach dem Einschalten der ihr zugeordneten Steuereinrichtung zunächst in den sicheren Betriebszustand gebracht wird. Nachdem erfolgreich überprüft wurde, ob die Steuereinrichtung richtig konfiguriert ist, kann in den unsicheren Betriebszustand gewechselt werden. Anderenfalls wird der Wechsel in den unsicheren Betriebszustand gesperrt.

Bei einer vorteilhaften Ausführungsform der Erfindung wird jeder im dritten Datenspeicher abgelegte zweite Prüfcode jeweils über den ersten Bus zu der dem betreffenden Prüfcode zugeordneten Steuereinrichtung übertragen, wobei der zu der betreffenden Steuereinrichtung übertragene zweite Prüfcode jeweils mit dem im Datenspeicher dieser Steuereinrichtung abgelegten zweiten Prüfcode verglichen wird, und wobei bei Übereinstimmung der beiden zweiten Prüfcodes die der betreffenden Steuereinrichtung zugeordnete Maschine in den unsicheren Betriebszustand gebracht wird. Dabei wird davon ausgegangen, dass bei Übereinstimmung der beiden zweiten Prüfcodes die betreffende Steuereinrichtung richtig konfiguriert ist.

Bei einer zweckmäßigen Ausgestaltung der Erfindung ist die mindestens eine Maschine ein Aktuator, insbesondere ein Elektromotor. Der Elektromotor kann dabei mit der ihm zugeordneten Steuereinrichtung, der Eingabeeinrichtung und der Ausgabeeinrichtung in eine Baugruppe integriert sein.

Nachfolgend ist ein Ausführungsbeispiel der Erfindung anhand der Zeichnung näher erläutert. Es zeigt:
- Fig. 1: ein Blockschaltbild einer Vorrichtung, die mehrere elektrische Antriebe aufweist, die über einen Feldbus mit einer speicherprogrammierbaren Steuerung verbunden sind, welche zum Konfigurieren der Antriebe über einen weiteren Bus an einem Mikrocomputer angeschlossen ist,
- Fig. 2: ein Blockschaltbild ähnlich Fig. 1, wobei jedoch einer der Antriebe durch ein entsprechendes Ersatzteil ersetzt und der Mikrocomputer entfernt wurde.

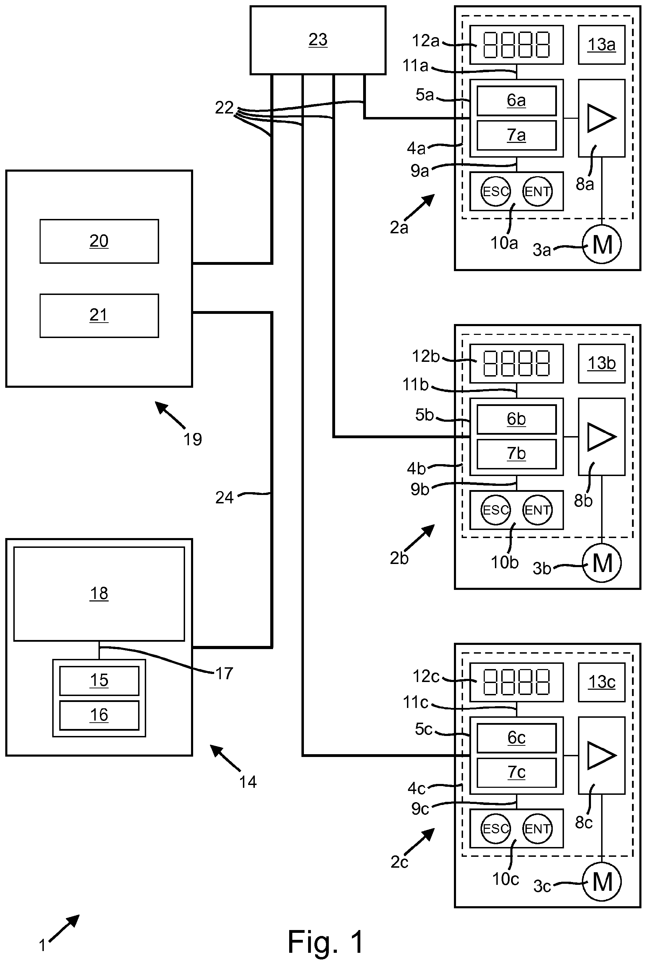

Eine in Fig. 1 dargestellte, im Ganzen mit 1 bezeichnete Vorrichtung weist mehrere elektrische Antriebe 2a, 2b, 2c auf, die jeweils einen Elektromotor, der nachstehend auch als Maschine 3a, 3b, 3c bezeichnet wird, und eine Steuereinrichtung 4a, 4b, 4c zum Ansteuern der Maschine 3a, 3b, 3c hat.

Die Steuereinrichtung 4a, 4b, 4c weist jeweils einen Mikrocomputer 5a, 5b, 5c auf, der einen ersten Mikroprozessor 6a, 6b, 6c und einen ersten Datenspeicher 7a, 7b, 7c hat. Zum Kommutieren einer Motorwicklung der Maschine 3a, 3b, 3c weist die Steuereinrichtung 4a, 4b, 4c eine Endstufe 8a, 8b, 8c auf, die mit dem Mikrocomputer 5a, 5b, 5c in Steuerverbindung steht und mit Wicklungsanschlüssen der Maschine 3a, 3b, 3c verbunden ist.

In dem ersten Datenspeicher 7a, 7b, 7c ist jeweils ein Betriebsprogramm abgelegt, das in an sich bekannter Weise mittels des ersten Mikroprozessors 6a, 6b, 6c ausführbar ist, um die betreffende Maschine 3a, 3b, 3c zu steuern. Mittels der Steuereinrichtung 4a, 4b, 4c kann die Maschine 3a, 3b, 3c in einen sicheren und einen unsicheren Betriebszustand gebracht werden. Im sicheren Betriebszustand ist die Motorwicklung der Maschine 3a, 3b, 3c stromlos und im unsicheren Betriebszustand wird die Motorwicklung bestromt.

Der erste Mikrocomputer 5a, 5b, 5c jedes Antriebs 2a, 2b, 2c ist jeweils über eine erste Übertragungsstrecke 9a, 9b, 9c mit einer dem betreffenden Antrieb 2a, 2b, 2c zugeordneten Eingabeeinrichtung 10a, 10b, 10c und über eine zweite Übertragungsstrecke 11a, 11b, 11c mit einer mit einer dem betreffenden Antrieb 2a, 2b, 2c zugeordneten ersten Ausgabeeinrichtung 12a, 12b, 12c verbunden, die als alphanumerische Anzeige ausgestaltet ist. Die ersten Übertragungsstrecken 9a, 9b, 9c und die zweiten Übertragungsstrecken 11a, 11b, 11c sind bevorzugt als Punkt-zu-Punkt Verbindung ausgestaltet.

Jeder elektrische Antrieb 2a, 2b, 2c hat außerdem ein Netzteil 13a, 13b, 13c, das zur Stromversorgung der Maschine 3a, 3b, 3c, des ersten Mikrocomputers 5a, 5b, 5c, der Eingabeeinrichtung 10a, 10b, 10c und der ersten Ausgabeeinrichtung 12a, 12b, 12c dient.

Die Vorrichtung 1 weist außerdem einen zweiter Mikrocomputer 14 auf, der einen zweiten Mikroprozessor 15 sowie einen zweiten Datenspeicher 16 hat. Der zweiter Mikrocomputer 14 ist über eine dritte Übertragungsstrecke 17 mit einer zweiten Ausgabeeinrichtung 18 verbunden, die als Computerbildschirm ausgestaltet ist und bei Bedarf mit dem zweiten Mikrocomputer 14 in ein Gehäuse integriert sein kann (z.B. Laptop oder Tablet-PC). In dem zweiten Datenspeicher 16 ist ein auf dem zweiten Mikroprozessor 15 ausführbares Konfigurationsprogramm abgelegt, mittels dem Konfigurationsdaten für die ersten Mikrocomputer 5a, 5b, 5c generiert, im zweiten Datenspeicher 16 abgelegt und über die Ausgabeeinrichtung 18 angezeigt werden können.

In dem zweiten Datenspeicher 16 ist außerdem ein auf dem zweiten Mikroprozessor 15 ausführbares erstes Prüfcodeerzeugungsprogramm gespeichert, mittels dem nach einer ersten Prüfvorschrift aus den Konfigurationsdaten ein erster Prüfcode erzeugt werden kann. Der erste Prüfcode wird dabei in an sich bekannter Weise mit Hilfe eines Polynoms berechnet.

Wie in Fig. 1 erkennbar ist, hat die Vorrichtung außerdem einen dritten Mikrocomputer 19, der als speicherprogrammierbare Steuerung ausgestaltet ist, die einen dritten Mikroprozessor 20 sowie einen dritten Datenspeicher 21 aufweist. Der dritte Mikrocomputer 19 ist über einen ersten Bus 22 mit den ersten Mikrocomputern 5a, 5b, 5c verbunden. Die ersten Mikrocomputer 5a, 5b, 5c und der dritte Mikrocomputer 19 sind zu diesem Zweck jeweils über Busleitungen an einem Hub 23 angeschlossen. Der erste Bus 22 kann beispielsweise ein Feldbus sein.

Zusätzlich dazu ist der dritte Mikrocomputer 19 über einen zweiten Bus 24 mit dem zweiten Mikrocomputer 14 verbunden. Der zweite Bus 24 kann beispielsweise ein Ethernet-Bus sein.

Zum Konfigurieren der Antriebe 2a, 2b, 2c wird zunächst mit Hilfe des zweiten Mikrocomputers 14 für jeden Antrieb 2a, 2b, 2c ein die für diesen Antrieb vorgesehenen Konfigurationsdaten enthaltender Datensatz erzeugt und im zweiten Datenspeicher 16 abgelegt. Die Konfigurationsdaten beinhalten Daten, die dazu vorgesehen sind, bei der Abarbeitung des Betriebsprogramms auf dem ersten Mikrocomputer 5a, 5b, 5c des betreffenden Antriebs 2a, 2b, 2c verwendet zu werden. Ferner beinhalten die Konfigurationsdaten eine logische Kennung, welche den betreffenden Antrieb 2a, 2b, 2c bzw. eine dem Antrieb 2a, 2b, 2c zugeordnete Achse identifiziert. Außerdem wird in dem Datensatz die Netzwerkadresse des betreffenden Antriebs 2a, 2b, 2c gespeichert.

Durch Abarbeiten des ersten Prüfcodeerzeugungsprogramms auf dem zweiten Mikrocomputer 14 wird jeweils aus den Konfigurationsdaten der einzelnen Antriebe 2a, 2b, 2c nach der ersten Prüfvorschrift eine erster Prüfcode erzeugt und im zweiten Datenspeicher 16 abgelegt.

Die Konfigurationsdaten, die Netzwerkadresse und der erste Prüfcode werden jeweils für jeden Antrieb 2a, 2b, 2c über den zweiten Bus 24 zum dritten Mikrocomputer 19 übertragen und im dritten Datenspeicher 21 abgelegt. Vom dritten Mikrocomputer 19 werden die Konfigurationsdaten und der erste Prüfcode jeweils über den ersten Bus 22 zum ersten Mikrocomputer 5a, 5b, 5c des betreffenden Antriebs 2a, 2b, 2c weitergeleitet und in dessen erstem Datenspeicher 7a, 7b, 7c abgelegt.

In jedem ersten Datenspeicher 7a, 7b, 7c ist jeweils ein auf dem ersten Mikroprozessor 6a, 6b, 6c des betreffenden Antriebs 2a, 2b, 2c ausführbares erstes Kontrollprogramm gespeichert, mit dessen Hilfe jeweils aus den im ersten Datenspeicher 7a, 7b, 7c des betreffenden Antriebs 2a, 2b, 2c abgelegten Konfigurationsdaten nach der ersten Prüfvorschrift ein erster Kontrollwert für den ersten Prüfcode ermittelt und mit dem im ersten Datenspeicher 7a, 7b, 7c des betreffenden Antriebs 2a, 2b, 2c abgelegten ersten Prüfcode auf Übereinstimmung verglichen wird. Falls eine Abweichung festgestellt wird, werden die zuvor im ersten Datenspeicher 7a, 7b, 7c des betreffenden Antriebs 2a, 2b, 2c abgelegten Konfigurationsdaten nicht für das auf dem ersten Mikrocomputer 5a, 5b, 5c des betreffenden Antriebs 2a, 2b, 2c ablaufende Betriebsprogramm verwendet.

In jedem ersten Datenspeicher 7a, 7b, 7c ist außerdem jeweils ein auf dem ersten Mikroprozessor 6a, 6b, 6c des betreffenden Antriebs 2a, 2b, 2c ausführbares zweites Prüfcodeerzeugungsprogramm gespeichert. Wenn bei der Abarbeitung des ersten Kontrollprogramms die Übereinstimmung des ersten Kontrollwerts mit dem ersten Prüfcode festgestellt wurde, wird das zweite Prüfcodeerzeugungsprogramm abgearbeitet, um nach einer sich von der ersten Prüfvorschrift unterscheidenden zweiten Prüfvorschrift aus den im ersten Datenspeicher 7a, 7b, 7c des betreffenden Antriebs 2a, 2b, 2c abgelegten Konfigurationsdaten jeweils einen vom ersten Prüfcode abweichenden zweiten Prüfcode zu erzeugen. Der zweite Prüfcode wird mit Hilfe eines Polynoms berechnet, das sich von dem Polynom des ersten Prüfcodes unterscheidet.

Der zweite Prüfcode wird jeweils vom ersten Mikrocomputer 5a, 5b, 5c des betreffenden Antriebs 2a, 2b, 2c über den ersten Bus 22 zum dritten Mikrocomputer 19 übertragen, im dritten Datenspeicher 21 abgelegt und dann vom dritten Mikrocomputer 19 über den zweiten Bus 24 zum zweiten Mikrocomputer 14 übermittelt. Von dort wird der zweite Prüfcode über die dritte Übertragungsstrecke 17 an die zweite Ausgabeeinrichtung 18 übermittelt und mittels dieser zur Anzeige gebracht.

Vom zweiten Mikrocomputer 14 wird der zweite Prüfcode jeweils als zweiter Kontrollwert über den ersten Bus 22 zurück zu dem dem zweiten Kontrollwert zugeordneten ersten Mikrocomputer 5a, 5b, 5c übertragen. Dort wird der zweite Kontrollwert mit dem im ersten Datenspeicher 7a, 7b, 7c des betreffenden Antriebs 2a, 2b, 2c gespeicherten zweiten Prüfcode auf Übereinstimmung verglichen. Bei Übereinstimmung wird der zweite Prüfcode den vom betreffenden ersten Mikrocomputer 5a, 5b, 5c über dessen zweite Übertragungsstrecke 11a, 11b, 11c an die dem betreffenden Antrieb 2a, 2b, 2c zugeordnete erste Ausgabeeinrichtung 12a, 12b, 12c übertragen und dort angezeigt.

Der Benutzer des Antriebs 2a, 2b, 2c vergleicht nun den an der betreffenden ersten Ausgabeeinrichtung 12a, 12b, 12c angezeigten zweiten Prüfcode mit dem zweiten Prüfcode, der für den betreffenden Antrieb 2a, 2b, 2c an der zweiten Ausgabeeinrichtung 18 angezeigt wird. Wenn beide Prüfcodes übereinstimmen, wird davon ausgegangen, dass die Konfigurationsdaten in den richtigen Antrieb 2a, 2b, 2c geladen wurden. In diesem Fall betätigt der Benutzer innerhalb eines vorbestimmten Zeitfensters die Eingabeeinrichtung 10a, 10b, 10c des betreffenden Antriebs 2a, 2b, 2c, um ein Freigabesignal zu erzeugen und an den ersten Mikrocomputer 5a, 5b, 5c zu übermitteln. Außerdem trägt der Benutzer den zweiten Prüfcode in zu dem betreffenden Antrieb 2a, 2b, 2c gehörende technische Dokumente ein.

Die zuvor im ersten Datenspeicher 7a, 7b, 7c des betreffenden Antriebs 2a, 2b, 2c abgelegten Konfigurationsdaten werden nur dann in dem auf dem ersten Mikrocomputer 5a, 5b, 5c des betreffenden Antriebs 2a, 2b, 2c ablaufenden Betriebsprogramm verwendet, wenn erster Mikrocomputer 5a, 5b, 5c des betreffenden Antriebs 2a, 2b, 2c das Freigabesignal empfangen hat.

Falls bei einem Antrieb 2a, 2b, 2c der erste Kontrollwert nicht mit dem im ersten Datenspeicher abgelegten ersten Prüfcode übereinstimmt oder innerhalb des Zeitfensters für diesen Antrieb 2a, 2b, 2c kein Freigabesignal erzeugt wird, wird die Steuereinrichtung 4a, 4b, 4c des betreffenden Antriebs 2a, 2b, 2c im sicheren Betriebszustand betrieben und der Wechsel zum unsicheren Betriebszustand wird gesperrt.

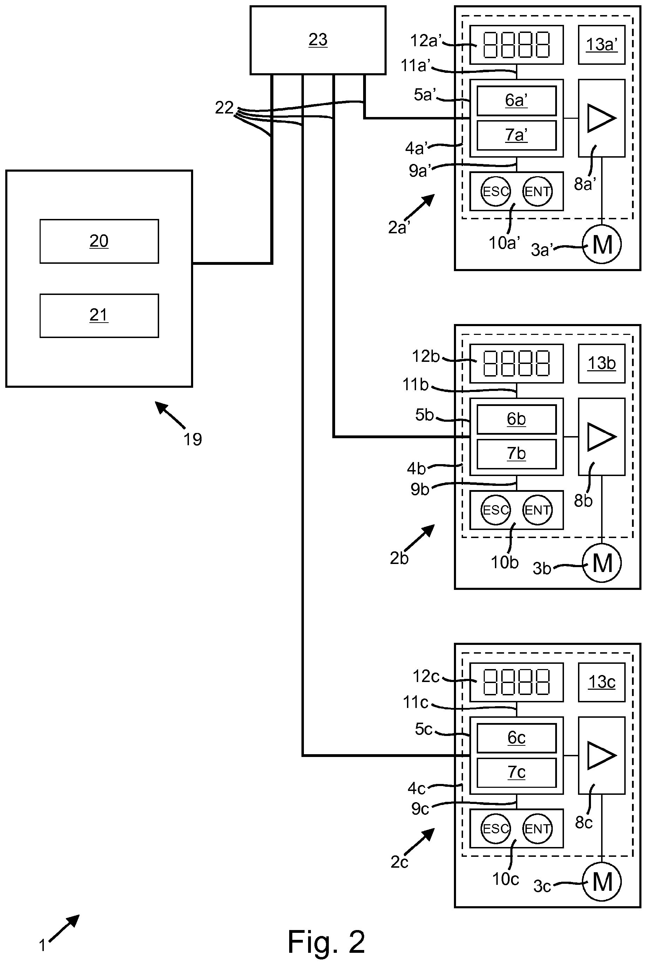

Bei dem in Fig. 2 abgebildeten Ausführungsbeispiel wurden zunächst die Antriebe 2a, 2b, 2c - wie vorstehend erläutert - konfiguriert und danach wurden der zweite Mikrocomputer 14 und der zweite Bus 24 vom dritten Mikrocomputer 19 entfernt. Nachdem nach längerer Betriebsdauer am Antrieb 2a ein Defekt aufgetreten war, wurde dieser gegen einen entsprechenden Ersatz-Antrieb 2a' ausgewechselt, der noch nicht konfiguriert ist. Die Steuereinrichtung 4a' des Ersatz-Antriebs 2a' weist einen vierten Mikrocomputer 5a' auf, der einen vierten Mikroprozessor 6a' und einen vierten Datenspeicher 7a' hat. Der vierte Mikrocomputer 5a' ist über eine vierte Übertragungsstrecke 9a' mit einer weiteren Eingabeeinrichtung 10a' und über eine fünfte Übertragungsstrecke 11a' mit einer dritten Ausgabeeinrichtung 12a' verbunden. Das auf dem vierten Mikrocomputer 5a' ablaufende Betriebsprogramm ist derart ausgestaltet, dass die Maschine 3a' sich bei ihrer Inbetriebnahme solange im sicheren Betriebszustand befindet, bis der Ersatz-Antrieb 2a' erfolgreich konfiguriert wurde. Nachfolgend wird die Konfiguration des neuen Antriebs 2a' näher erläutert.

In einem ersten Verfahrensschritt werden die Konfigurationsdaten des ersetzten Antriebs 2a und der zugehörige erste und zweite Prüfcode vom dritten Mikrocomputer 19 über den ersten Bus 22 zum vierten Mikrocomputer 5a' übertragen und im vierten Datenspeicher 7a' abgelegt.

Mit Hilfe eines auf dem vierten Mikrocomputer 5a' ablaufenden dritten Kontrollprogramms, welches dem ersten Kontrollprogramm des als defekt ausgetauschten Antriebs 2a entspricht, wird mittels der im vierten Datenspeicher 7a' abgelegten Konfigurationsdaten nach der ersten Prüfvorschrift ein dritter Kontrollwert für den ersten Prüfcode ermittelt und mit dem im vierten Datenspeicher 7a' abgelegten ersten Prüfcode auf Übereinstimmung verglichen. Falls eine Abweichung festgestellt wird, wird davon ausgegangen, dass die Konfigurationsdaten bei der Datenübertragung verfälscht wurden. In diesem Fall werden die im vierten Datenspeicher 7a' abgelegten Konfigurationsdaten nicht für das auf dem vierten Mikrocomputer 5a' ausführbare Betriebsprogramm verwendet.

Im vierten Datenspeicher 7a' ist außerdem ein auf dem vierten Mikroprozessor 6a' ausführbares viertes Prüfcodeerzeugungsprogramm gespeichert, welches dem zweiten Kontrollprogramm des als defekt ausgetauschten Antriebs 2a entspricht. Wenn bei der Abarbeitung des dritten Kontrollprogramms die Übereinstimmung des dritten Kontrollwerts mit dem ersten Prüfcode festgestellt wurde, wird das vierte Prüfcodeerzeugungsprogramm abgearbeitet, um nach der zweiten Prüfvorschrift aus den im vierten Datenspeicher 7a' abgelegten Konfigurationsdaten einen vom ersten Prüfcode abweichenden vierten Prüfcode zu erzeugen. Dieser wird vom vierten Mikrocomputer 5a' über die vierte Übertragungsstrecke 9a' an die dritte Ausgabeeinrichtung 12a' übertragen und dort angezeigt.

Der Benutzer des Antriebs 2a' vergleicht nun den an der dritten Ausgabeeinrichtung 12a' angezeigten vierten Prüfcode mit dem zweiten Prüfcode, der bei der Konfigurierung des als defekt ausgetauschten Antriebs 2a in dessen technischen Dokumenten eingetragen wurde. Wenn beide Prüfcodes übereinstimmen, wird davon ausgegangen, dass die richtigen Konfigurationsdaten in den vierten Antrieb 2a' geladen wurden. In diesem Fall betätigt der Benutzer innerhalb eines vorbestimmten Zeitfensters die Eingabeeinrichtung 10a' des vierten Antriebs 2a', um ein Freigabesignal zu erzeugen und an den vierten Mikrocomputer 5a' zu übermitteln.

Die im vierten Datenspeicher 7a' abgelegten Konfigurationsdaten werden nur dann in dem zur Ansteuerung der Maschine 3a' vorgesehenen Betriebsprogramm verwendet wenn der vierte Mikrocomputer 5a' das Freigabesignal innerhalb des vorbestimmten Zeitfensters empfangen hat.

Falls bei dem neuen Antrieb 2a' der vierte Kontrollwert nicht mit dem im vierten Datenspeicher 7a' abgelegten ersten Prüfcode übereinstimmt oder innerhalb des Zeitfensters für diesen Antrieb 2a' kein Freigabesignal erzeugt wird, sperrt die vierte Steuereinrichtung 4a' des vierten Antriebs 2a' weiterhin das Umschalten in den unsicheren Betriebszustand.

## Patentansprüche

1. Verfahren zum Betreiben mindestens einer Maschine (3a, 3b, 3c, 3a'), die mittels einer Steuereinrichtung (4a, 4b, 4c, 4a') ansteuerbar und in mindestens einen sicheren und wenigstens einen unsicheren Betriebszustand bringbar ist, umfassend folgende Schritte:
a) Für die Maschine (3a, 3b, 3c, 3a') wird eine Steuereinrichtung (4a, 4b, 4c) bereitgestellt, die wenigstens einen ersten Mikrocomputer (5a, 5b, 5c) aufweist, der mindestens einen ersten Mikroprozessor (6a, 6b, 6c) und einen ersten Datenspeicher (7a, 7b, 7c) umfasst, wobei der erste Mikrocomputer (5a, 5b, 5c) über eine erste Übertragungsstrecke (9a, 9b, 9c) mit einer Eingabeeinrichtung (10a, 10b, 10c) und über eine zweite Übertragungsstrecke (11a, 11b, 11c) mit einer ersten Ausgabeeinrichtung (12a, 12b, 12c) verbunden ist,
b) es wird ein zweiter Mikrocomputer (14) bereitgestellt, der mindestens einen zweiten Mikroprozessor (6a, 6b, 6c) und einen zweiten Datenspeicher (16) umfasst und über eine dritte Übertragungsstrecke (17) mit einer zweiten Ausgabeeinrichtung (18) verbunden ist,
c) mit Hilfe eines auf dem zweiten Mikrocomputer (14) ablaufenden Konfigurationsprogramms werden Konfigurationsdaten für den ersten Mikrocomputer (5a, 5b, 5c) generiert,
d) mit Hilfe eines auf dem zweiten Mikrocomputer (14) ablaufenden, nach einer ersten Prüfvorschrift arbeitenden ersten Prüfcodeerzeugungsprogramms wird aus den Konfigurationsdaten ein erster Prüfcode erzeugt,
e) die Konfigurationsdaten und der erste Prüfcode werden über eine Busverbindung zum ersten Mikrocomputer (5a, 5b, 5c) übertragen und im ersten Datenspeicher (7a, 7b, 7c) abgelegt,
f) mit Hilfe eines auf dem ersten Mikrocomputer (5a, 5b, 5c) ablaufenden ersten Kontrollprogramms wird mittels der im ersten Datenspeicher (7a, 7b, 7c) abgelegten Konfigurationsdaten nach der ersten Prüfvorschrift ein erster Kontrollwert für den ersten Prüfcode ermittelt und mit dem im ersten Datenspeicher (7a, 7b, 7c) abgelegten ersten Prüfcode auf Übereinstimmung verglichen,
**gekennzeichnet durch** folgende weitere Schritte:
g) mit Hilfe eines auf dem ersten Mikrocomputer (5a, 5b, 5c) ablaufenden zweiten Prüfcodeerzeugungsprogramms wird nach einer sich von der ersten Prüfvorschrift unterscheidenden zweiten Prüfvorschrift aus den im ersten Datenspeicher (7a, 7b, 7c) abgelegten Konfigurationsdaten ein von dem ersten Prüfcode abweichender zweiter Prüfcode erzeugt,
h) der zweite Prüfcode wird vom ersten Mikrocomputer (5a, 5b, 5c) über die Busverbindung zum zweiten Mikrocomputer (14) und von diesem über die dritte Übertragungsstrecke (17) an die zweite Ausgabeeinrichtung (18) übertragen und mittels dieser ausgegeben,
i) der zweite Prüfcode wird als zweiter Kontrollwert vom zweiten Mikrocomputer (14) über die Busverbindung zurück zum ersten Mikrocomputer (5a, 5b, 5c) übertragen,
j) der zuvor im ersten Datenspeicher (7a, 7b, 7c) zwischengespeicherte zweite Prüfcode und/oder ein durch erneutes Abarbeiten des zweiten Prüfcodeerzeugungsprogramms aus den im ersten Datenspeicher (7a, 7b, 7c) abgelegten Konfigurationsdaten erzeugter weiterer zweiter Prüfcode und der zweite Kontrollwert werden mittels des ersten Mikrocomputers (5a, 5b, 5c) auf Übereinstimmung verglichen,
k) bei Übereinstimmung wird der zweite Prüfcode vom ersten Mikrocomputer (5a, 5b, 5c) über die zweite Übertragungsstrecke (11a, 11b, 11c) an die erste Ausgabeeinrichtung (12a, 12b, 12c) übertragen und mittels dieser ausgegeben,
l) die im ersten Datenspeicher (7a, 7b, 7c) abgelegten Konfigurationsdaten werden nur dann in einem zur Ansteuerung der Maschine (3a, 3b, 3c, 3a') vorgesehenen, auf dem ersten Mikrocomputer (5a, 5b, 5c) ablaufenden Betriebsprogramm verwendet, wenn
α) der erste Kontrollwert mit dem im ersten Datenspeicher (7a, 7b, 7c) abgelegten ersten Prüfcode übereinstimmt und
β) vom Benutzer der Maschine bei Übereinstimmung des an der ersten Ausgabeeinrichtung (12a, 12b, 12c) ausgegebenen zweiten Prüfcodes mit dem an der zweiten Ausgabeeinrichtung (18) ausgegebenen zweiten Prüfcode mittels der Eingabeeinrichtung (10a, 10b, 10c) ein Freigabesignal erzeugt und über die erste Übertragungsstrecke zum ersten Mikroprozessor (6a, 6b, 6c) übertragen wird.

2. Verfahren nach Anspruch 1, wobei ein dritter Mikrocomputer (19) bereitgestellt wird, der mindestens einen dritten Mikroprozessor (20) und einen dritten Datenspeicher (21) umfasst, wobei die Busverbindung einen den dritten Mikrocomputer (19) mit dem ersten Mikrocomputer (5a, 5b, 5c) verbindenden ersten Bus (22) und einen den dritten Mikrocomputer (19) mit dem zweiten Mikrocomputer (14) verbindenden zweiten Bus (24) aufweist, wobei in Schritt e) die Konfigurationsdaten und der erste Prüfcode vom zweiten Mikrocomputer (14) über den zweiten Bus (24) zum dritten Mikrocomputer (19) übertragen, im dritten Datenspeicher (21) abgelegt und vom dritten Mikrocomputer (19) über den ersten Bus (22) zum ersten Mikrocomputer (5a, 5b, 5c) übertragen werden, wobei in Schritt h) der zweite Prüfcode vom ersten Mikrocomputer (5a, 5b, 5c) über den ersten Bus (22) zum dritten Mikrocomputer (19) übertragen, im dritten Datenspeicher (21) abgelegt und vom dritten Mikrocomputer (19) über den zweiten Bus (24) zum zweiten Mikrocomputer (14) übermittelt wird, und wobei der zweite Kontrollwert in Schritt i) vom zweiten Mikrocomputer (14) über den zweiten Bus (24) zurück zum dritten Mikrocomputer (19) und über den ersten Bus (22) vom dritten Mikrocomputer (19) zurück zum ersten Mikrocomputer (5a, 5b, 5c) übertragen wird.

3. Verfahren nach Anspruch 2, umfassend folgende weitere Verfahrensschritte:
a) die Steuereinrichtung (4a, 4b, 4c) wird gegen ein entsprechendes Ersatzteil (4a') ausgetauscht, das wenigstens einen vierten Mikrocomputer (5a') aufweist, der mindestens einen vierten Mikroprozessor (6a') und einen vierten Datenspeicher (7a') umfasst, wobei der vierte Mikrocomputer (5a') über eine vierte Übertragungsstrecke (9a') mit einer weiteren Eingabeeinrichtung (10a') und über eine fünfte Übertragungsstrecke (11a') mit einer dritten Ausgabeeinrichtung (12a') verbunden ist,
b) es werden die Konfigurationsdaten sowie der erste und zweite Prüfcode vom dritten Mikrocomputer (19) über den ersten Bus (22) zum vierten Mikrocomputer (5a') übertragen und im vierten Datenspeicher (7a') abgelegt,
c) mit Hilfe eines auf dem vierten Mikrocomputer (5a') ablaufenden dritten Kontrollprogramms wird mittels der im vierten Datenspeicher (7a') abgelegten Konfigurationsdaten nach der ersten Prüfvorschrift ein dritter Kontrollwert für den ersten Prüfcode ermittelt und mit dem im vierten Datenspeicher (7a') abgelegten ersten Prüfcode auf Übereinstimmung verglichen,
d) mit Hilfe eines auf dem vierten Mikrocomputer (5a') ablaufenden vierten Prüfcodeerzeugungsprogramms wird nach der zweiten Prüfvorschrift aus den im vierten Datenspeicher (7a') abgelegten Konfigurationsdaten ein von dem ersten Prüfcode abweichender dritter Prüfcode erzeugt und vom vierten Mikrocomputer (5a') über die fünfte Übertragungsstrecke (11a') an die dritte Ausgabeeinrichtung (12a') übertragen und mittels dieser ausgegeben,
e) die im vierten Datenspeicher (7a') abgelegten Konfigurationsdaten werden nur dann in einem zur Ansteuerung der Maschine (3a') vorgesehenen, auf dem vierten Mikrocomputer (5a') ablaufenden Betriebsprogramm verwendet, wenn mittels der weiteren Eingabeeinrichtung (10a') ein Freigabesignal erzeugt und über die vierte Übertragungsstrecke (9a') zum vierten Mikroprozessor (6a') übertragen wird.

4. Verfahren nach Anspruch 3, wobei über den ersten Bus mindestens zwei erste Mikrocomputer (5a, 5b, 5c, 5a'), die jeweils eine Steuereinrichtung (4a, 4b, 4c) einer Maschine (3a, 3b, 3c, 3a') zugeordnet sind, mit dem dritten Mikrocomputer (19) verbunden sind, wobei in den ersten Datenspeichern (7a, 7b, 7c, 7a') dieser Steuereinrichtungen (4a, 4b, 4c, 4a') jeweils eine die betreffende Steuereinrichtung (4a, 4b, 4c, 4a') eindeutig identifizierende Kennung nichtflüchtig abgelegt ist, wobei die Kennungen vorzugsweise zyklisch über den ersten Bus (22) zum dritten Mikrocomputer (19) übertragen und mit im dritten Datenspeicher (21) abgelegten Referenzwerte verglichen werden, wobei für den Fall, dass eine Kennung mit keinem der Referenzwerte übereinstimmt,
a) für die dieser Kennung zugeordnete Steuereinrichtung (4a') die Verfahrensschritte b) bis i) aus Anspruch 3 durchgeführt werden, und
b) die betreffende Kennung als zusätzlicher Referenzwert im dritten Datenspeicher (21) abgelegt wird, wenn
α) für diese Steuereinrichtung (4a') der dritte Kontrollwert mit dem im vierten Datenspeicher (21) abgelegten ersten Prüfcode übereinstimmt und
β) mittels der dieser Steuereinrichtung (4a') zugeordneten Eingabeeinrichtung (10a') ein Freigabesignal erzeugt und über die vierte Übertragungsstrecke (9a') zum vierten Mikroprozessor (6a') übertragen wird.

5. Verfahren nach einem der Ansprüche 1 bis 4, wobei die Maschine (3a, 3b, 3c, 3a') nach dem Einschalten der ihr zugeordneten Steuereinrichtung (4a, 4b, 4c, 4a') zunächst in den sicheren Betriebszustand gebracht wird.

6. Verfahren nach Anspruch 5, wobei jeder im dritten Datenspeicher (21) abgelegte zweite Prüfcode jeweils über den ersten Bus (22) zu der dem betreffenden Prüfcode zugeordneten Steuereinrichtung (4a, 4b, 4c, 4a') übertragen wird, wobei der zu der betreffenden Steuereinrichtung (4a, 4b, 4c, 4a') übertragene zweite Prüfcode jeweils mit dem im Datenspeicher (7a, 7b, 7c, 7a') dieser Steuereinrichtung (4a, 4b, 4c, 4a') abgelegten zweiten Prüfcode verglichen wird, und wobei bei Übereinstimmung der beiden zweiten Prüfcodes die der betreffenden Steuereinrichtung (4a, 4b, 4c, 4a') zugeordnete Maschine (3a, 3b, 3c, 3a') in den unsicheren Betriebszustand gebracht wird.

7. Verfahren nach einem der Ansprüche 1 bis 6, wobei die mindestens eine Maschine (3a, 3b, 3c, 3a') ein Aktuator, insbesondere ein Elektromotor ist.

## Claims

1. Method for operating at least one machine (3a, 3b, 3c, 3a') that is actuatable by means of a control device (4a, 4b, 4c, 4a') and able to be put into at least one safe and at least one unsafe operating state, comprising the following steps:
a) a control device (4a, 4b, 4c) for the machine (3a, 3b, 3c, 3a') is provided that has at least one first microcomputer (5a, 5b, 5c), which comprises at least one first microprocessor (6a, 6b, 6c) and a first data memory (7a, 7b, 7c), wherein the first microcomputer (5a, 5b, 5c) is connected to an input device (10a, 10b, 10c) via a first transmission link (9a, 9b, 9c) and to a first output device (12a, 12b, 12c) via a second transmission link (11a, 11b, 11c),
b) a second microcomputer (14) is provided, which comprises at least one second microprocessor (6a, 6b, 6c) and a second data memory (16) and is connected to a second output device (18) via a third transmission link (17),
c) a configuration program running on the second microcomputer (14) is used to generate configuration data for the first microcomputer (5a, 5b, 5c),
d) a first check code generation program running on the second microcomputer (14) and operating according to a first checking specification is used to generate a first check code from the configuration data,
e) the configuration data and the first check code are transmitted to the first microcomputer (5a, 5b, 5c) via a bus connection and stored in the first data memory (7a, 7b, 7c),
f) a first control program running on the first microcomputer (5a, 5b, 5c) is used to ascertain a first control value for the first check code according to the first checking specification by means of the configuration data stored in the first data memory (7a, 7b, 7c) and to compare said first control value with the first check code stored in the first data memory (7a, 7b, 7c) for concordance,
**characterized by** the following further steps:
g) a second check code generation program running on the first microcomputer (5a, 5b, 5c) is used to generate a second check code, different from the first check code, according to a second checking specification, different from the first checking specification, from the configuration data stored in the first data memory (7a, 7b, 7c),
h) the second check code is transmitted from the first microcomputer (5a, 5b, 5c) to the second microcomputer (14) via the bus connection and from said second microcomputer to the second output device (18) via the third transmission link (17) and is output by means of said output device,
i) the second check code is transmitted from the second microcomputer (14) back to the first microcomputer (5a, 5b, 5c) via the bus connection as a second control value,
j) the second check code previously buffer-stored in the first data memory (7a, 7b, 7c) and/or a further second check code, generated from the configuration data stored in the first data memory (7a, 7b, 7c) by virtue of fresh execution of the second check code generation program, and the second control value are compared by means of the first microcomputer (5a, 5b, 5c) for concordance,
k) concordance results in the second check code being transmitted from the first microcomputer (5a, 5b, 5c) to the first output device (12a, 12b, 12c) via the second transmission link (11a, 11b, 11c) and being output by means of said first output device,
1) the configuration data stored in the first data memory (7a, 7b, 7c) are used in an operating program, running on the first microcomputer (5a, 5b, 5c) and intended for actuating the machine (3a, 3b, 3c, 3a'), only if
α) the first control value is concordant with the first check code stored in the first data memory (7a, 7b, 7c) and
β) the user of the machine responds to concordance of the second check code output on the first output device (12a, 12b, 12c) with the second check code output on the second output device (18) by using the input device (10a, 10b, 10c) to generate an enable signal and to transmit said enable signal to the first microprocessor (6a, 6b, 6c) via the first transmission link.

2. Method according to Claim 1, wherein a third microcomputer (19) is provided, which comprises at least one third microprocessor (20) and a third data memory (21), wherein the bus connection has a first bus (22), connecting the third microcomputer (19) to the first microcomputer (5a, 5b, 5c), and a second bus (24), connecting the third microcomputer (19) to the second microcomputer (14), wherein step e) involves the configuration data and the first check code being transmitted from the second microcomputer (14) to the third microcomputer (19) via the second bus (24), being stored in the third data memory (21) and being transmitted from the third microcomputer (19) to the first microcomputer (5a, 5b, 5c) via the first bus (22), wherein step h) involves the second check code being transmitted from the first microcomputer (5a, 5b, 5c) to the third microcomputer (19) via the first bus (22), being stored in the third data memory (21) and being transmitted from the third microcomputer (19) to the second microcomputer (14) via the second bus (24), and wherein in step i) the second control value is transmitted from the second microcomputer (14) back to the third microcomputer (19) via the second bus (24) and from the third microcomputer (19) back to the first microcomputer (5a, 5b, 5c) via the first bus (22).

3. Method according to Claim 2, comprising the following further method steps:
a) the control device (4a, 4b, 4c) is exchanged for a corresponding spare (4a') and has at least one fourth microcomputer (5a'), which comprises at least one fourth microprocessor (6a') and a fourth data memory (7a'), wherein the fourth microcomputer (5a') is connected to a further input device (10a') via a fourth transmission link (9a') and to a third output device (12a') via a fifth transmission link (11a'),
b) the configuration data and the first and second check codes are transmitted from the third microcomputer (19) to the fourth microcomputer (5a') via the first bus (22) and are stored in the fourth data memory (7a'),
c) a third control program running on the fourth microcomputer (5a') is used to ascertain a third control value for the first check code according to the first checking specification by means of the configuration data stored in the fourth data memory (7a') and to compare said third control value with the first check code stored in the fourth data memory (7a') for concordance,
d) a fourth check code generation program running on the fourth microcomputer (5a') is used to generate a third check code, different from the first check code, according to the second checking specification from the configuration data stored in the fourth data memory (7a') and to transmit said third check code from the fourth microcomputer (5a') to the third output device (12a') via the fifth transmission link (11a') and to output it by means of said third output device,
e) the configuration data stored in the fourth data memory (7a') are used in an operating program, running on the fourth microcomputer (5a') and intended for actuating the machine (3a'), only if the further input device (10a') is used to generate an enable signal and to transmit it to the fourth microprocessor (6a') via the fourth transmission link (9a').

4. Method according to Claim 3, wherein the first bus connects at least two first microcomputers (5a, 5b, 5c, 5a'), which are each associated with a control device (4a, 4b, 4c) of a machine (3a, 3b, 3c, 3a'), to the third microcomputer (19), wherein the first data memories (7a, 7b, 7c, 7a') of these control devices (4a, 4b, 4c, 4a') each store an identifier, uniquely identifying the relevant control device (4a, 4b, 4c, 4a'), in non-volatile fashion, wherein the identifiers are preferably cyclically transmitted to the third microcomputer (19) via the first bus (22) and compared with reference values stored in the third data memory (21), wherein if an identifier is not concordant with any of the reference values,
a) method steps b) to i) from Claim 3 are performed for the control device (4a') associated with this identifier, and
b) the relevant identifier is stored in the third data memory (21) as an additional reference value if
α) for this control device (4a') the third control value is concordant with the first check code stored in the fourth data memory (21) and
β) the input device (10a') associated with this control device (4a') is used to generate an enable signal and to transmit it to the fourth microprocessor (6a') via the fourth transmission link (9a').

5. Method according to one of Claims 1 to 4, wherein the machine (3a, 3b, 3c, 3a') is initially put into the safe operating state after the control device (4a, 4b, 4c, 4a') associated with said machine is switched on.

6. Method according to Claim 5, wherein each second check code stored in the third data memory (21) is transmitted to the control device (4a, 4b, 4c, 4a') associated with the relevant check code, in each case via the first bus (22), wherein the second check code transmitted to the relevant control device (4a, 4b, 4c, 4a') is compared in each case with the second check code stored in the data memory (7a, 7b, 7c, 7a') of this control device (4a, 4b, 4c, 4a'), and wherein concordance of the two second check codes results in the machine (3a, 3b, 3c, 3a') associated with the relevant control device (4a, 4b, 4c, 4a') being put into the unsafe operating state.

7. Method according to one of Claims 1 to 6, wherein the at least one machine (3a, 3b, 3c, 3a') is an actuator, in particular an electric motor.

## Revendications

1. Procédé de fonctionnement d'au moins une machine (3a, 3b, 3c, 3a') pouvant être commandée au moyen d'un dispositif de commande (4a, 4b, 4c, 4a') et pouvant être amenée dans au moins un état de fonctionnement sécurisé et au moins un état de fonctionnement non sécurisé, comprenant les étapes suivantes :
a) il est prévu pour la machine (3a, 3b, 3c, 3a') un dispositif de commande (4a, 4b, 4c) comportant au moins un premier micro-ordinateur (5a, 5b, 5c) qui comprend au moins un premier microprocesseur (6a, 6b, 6c) et une première mémoire de données (7b, 7c, 7c), dans lequel le premier micro-ordinateur (5a, 5b, 5c) est relié par l'intermédiaire d'un premier trajet de transmission (9a, 9b, 9e) à un dispositif d'entrée (10a, 10b, 10e) et par l'intermédiaire d'un deuxième trajet de transmission (11a, 11b, 11c) à un premier dispositif de sortie (12a, 12b, 12c),
b) il est prévu un deuxième micro-ordinateur (14) qui comprend au moins un deuxième microprocesseur (6a, 6b, 6c) et une deuxième mémoire de données (16) et qui est relié à un deuxième dispositif de sortie (18) par l'intermédiaire d'un troisième trajet de transmission (17),
c) à l'aide d'un programme de configuration exécuté sur le deuxième micro-ordinateur (14), des données de configuration sont générées pour le premier micro-ordinateur (5a, 5b, 5c),
d) à l'aide d'un premier programme de génération de code de test qui s'exécute sur le deuxième micro-ordinateur (14) et fonctionne conformément à une première spécification de test, un premier code de test est généré à partir des données de configuration,
e) les données de configuration et le premier code de test sont transmis au premier micro-ordinateur (5a, 5b, 5c) par l'intermédiaire d'une liaison par bus et sont stockés dans la première mémoire de données (7a, 7b, 7c),
f) à l'aide d'un premier programme de commande s'exécutant sur le premier micro-ordinateur (5a, 5b, 5c), une première valeur de contrôle pour le premier code de test est déterminée, conformément à la première spécification de test, au moyen des données de configuration stockées dans la mémoire de données (7a, 7b, 7c) et est comparée au premier code de test stocké dans la première mémoire de données (7a, 7b, 7c) pour déterminer s'ils concordent,
**caractérisé par** les étapes supplémentaires suivantes :
g) à l'aide d'un deuxième programme de génération de code de test s'exécutant sur le premier micro-ordinateur (5a, 5b, 5c), un deuxième code de test différent du premier code de test est généré à partir des données de configuration stockées dans la première mémoire de données (7a, 7b, 7c) conformément à une deuxième spécification de test différente de la première spécification de test,
h) le deuxième code de test est transmis par l'intermédiaire de la liaison par bus du premier micro-ordinateur (5a, 5b, 5c) au deuxième micro-ordinateur (14) et de ce dernier, au deuxième dispositif de sortie (18) par l'intermédiaire du troisième trajet de transmission (17) et est délivré au moyen de ce dernier,
i) le deuxième code de test est renvoyé au premier micro-ordinateur (5a, 5b, 5c) par le deuxième micro-ordinateur (14) par l'intermédiaire de la liaison par bus en tant que deuxième valeur de contrôle,
j) le deuxième code de test précédemment stocké temporairement dans la première mémoire de données (7a, 7b, 7c) et/ou un autre deuxième code de test généré par une nouvelle exécution du deuxième programme de génération de code de test à partir des données de configuration stockées dans la première mémoire de données (7a, 7b, 7c) et la deuxième valeur de contrôle sont comparés au moyen du premier microprocesseur (5a, 5b, 5c) pour déterminer s'ils concordent,
k) en cas de concordance, le deuxième code de test est transmis par l'intermédiaire du deuxième trajet de transmission (11a, 11b, 11c) du premier micro-ordinateur (5a, 5b, 5c) au premier dispositif de sortie (12a, 12b, 12c) et est délivré au moyen de ce dernier,
l) les données de configuration stockées dans la première mémoire de données (7a, 7b, 7c) ne sont utilisées que dans un programme de commande prévu pour commander la machine (3a, 3b, 3c, 3a') et s'exécutant sur le premier micro-ordinateur (5a, 5b, 5c) lorsque
α) la première valeur de contrôle concorde avec le premier code de test stocké dans la première mémoire de données (7a, 7b, 7c), et
β) lorsque le deuxième code de test délivré sur le premier dispositif de sortie (12a, 12b, 12c) concorde avec le deuxième code de test délivré sur le deuxième dispositif de sortie (18), un signal de validation est généré par l'utilisateur de la machine au moyen du dispositif d'entrée (10a, 10b, 10e) et est transmis par l'intermédiaire du premier trajet de transmission au premier microprocesseur (6a, 6b, 6c).

2. Procédé selon la revendication 1, dans lequel il est prévu un troisième micro-ordinateur (19) comprenant au moins un troisième microprocesseur (20) et une troisième mémoire de données (21), dans lequel la liaison par bus comprend un premier bus (22) reliant le troisième micro-ordinateur (19) au premier micro-ordinateur (5a, 5b, 5c) et un deuxième bus (24) reliant le troisième micro-ordinateur (19) au deuxième micro-ordinateur (14), dans lequel, à l'étape e), les données de configuration et le premier code de test sont transmis par l'intermédiaire du deuxième bus (24) du deuxième micro-ordinateur (14) au troisième micro-ordinateur (19), sont stockés dans la troisième mémoire de données (21) et sont transmis par l'intermédiaire du premier bus (22) du troisième micro-ordinateur (19) au premier micro-ordinateur (5a, 5b, 5c), dans lequel, à l'étape h), le deuxième code de test est transmis par l'intermédiaire du premier bus (22) du premier micro-ordinateur (5a, 5b, 5c) au troisième micro-ordinateur (19), est stocké dans la troisième mémoire de données (21) et est transmis par l'intermédiaire du deuxième bus (24) du troisième micro-ordinateur (19) au deuxième micro-ordinateur (14), et dans lequel la deuxième valeur de contrôle, à l'étape i), est transmise par l'intermédiaire du deuxième bus (24) du deuxième micro-ordinateur (14) au troisième micro-ordinateur (19) et est renvoyée par l'intermédiaire du premier bus (22) du troisième micro-ordinateur (19) au premier micro-ordinateur (5a, 5b, 5c).

3. Procédé selon la revendication 2, comprenant les étapes de procédé supplémentaires suivantes :
a) le dispositif de commande (4a, 4b, 4c) est remplacé par un composant de rechange correspondant (4a') comportant au moins un quatrième micro-ordinateur (5a') qui comprend au moins un quatrième microprocesseur (6a') et une quatrième mémoire de données (7a'), dans lequel le quatrième micro-ordinateur (5a') est relié par l'intermédiaire d'un quatrième trajet de transmission (9a') à un autre dispositif d'entrée (10a') et par l'intermédiaire d'un cinquième trajet de transmission (11a') à un troisième dispositif de sortie (12a'),
b) les données de configuration et les premier et deuxième codes de test sont transmis par l'intermédiaire du premier bus (22) du troisième micro-ordinateur (19) au quatrième micro-ordinateur (5a') et sont stockés dans la quatrième mémoire de données (7a'),
c) à l'aide d'un troisième programme de commande s'exécutant sur le quatrième micro-ordinateur (5a'), une troisième valeur de contrôle pour le premier code de test est déterminée au moyen des données de configuration stockées dans la quatrième mémoire de données (7a') conformément à la première spécification de test et est comparée au premier code de test stocké dans la quatrième mémoire de données (7a') pour déterminer s'ils concordent,
d) à l'aide d'un quatrième programme de génération de code de test s'exécutant sur le quatrième micro-ordinateur (5a'), un troisième code de test différent du premier code de test est généré à partir des données de configuration stockées dans la quatrième mémoire de données (7a') conformément à la deuxième spécification de test et est transmis par l'intermédiaire du cinquième trajet de transmission (11a') du quatrième micro-ordinateur (5a') au troisième dispositif de sortie (12a') et est délivré au moyen de ce dernier,
e) les données de configuration stockées dans la quatrième mémoire de données (7a') ne sont utilisées que dans un programme de commande prévu pour commander la machine (3a') et s'exécutant sur le quatrième micro-ordinateur (5a'), lorsqu'un signal de validation est généré par l'autre dispositif d'entrée (10a') et est transmis par l'intermédiaire du quatrième trajet de transmission (9a') au quatrième microprocesseur (6a').

4. Procédé selon la revendication 3, dans lequel au moins deux premiers micro-ordinateurs (5a, 5b, 5c, 5a'), qui sont respectivement associés à un dispositif de commande (4a, 4b, 4c) d'une machine (3a, 3b, 3c, 3a'), sont reliés par l'intermédiaire du premier bus au troisième micro-ordinateur (19), dans lequel un identificateur identifiant de manière univoque le dispositif de commande (4a, 4b, 4c, 4a') concerné est stocké de manière non volatile dans les premières mémoires de données (7a, 7b, 7c, 7a') desdits dispositifs de commande (4a, 4b, 4c, 4a'), dans lequel les identificateurs sont de préférence transmis cycliquement par l'intermédiaire du premier bus (22) au troisième micro-ordinateur (19) et sont comparés à des valeurs de référence stockées dans la troisième mémoire de données (21),
dans lequel, dans le cas où un identificateur ne concorde avec aucune des valeurs de référence,
a) les étapes de procédé b) à i) de la revendication 3 sont exécutées pour le dispositif de commande (4a') associé audit identificateur, et
b) l'identificateur concerné est stocké en tant qu'autre valeur de référence dans la troisième mémoire de données (21), lorsque
α) pour ledit dispositif de commande (4a'), la troisième valeur de contrôle concorde avec le premier code de test stocké dans la quatrième mémoire de données (21), et
β) lorsqu'un signal de validation est généré au moyen du dispositif d'entrée (10a') associé audit dispositif de commande (4a') et est transmis au quatrième microprocesseur (6a') par l'intermédiaire du quatrième trajet de transmission (9a').

5. Procédé selon l'une des revendications 1 à 4, dans lequel la machine (3a, 3b, 3c, 3a') est d'abord amenée à l'état de fonctionnement sécurisé après mise sous tension du dispositif de commande (4a, 4b, 4c, 4a') qui lui a été associé.

6. Procédé selon la revendication 5, dans lequel chaque deuxième code de test stocké dans la troisième mémoire de données (21) est transmis par l'intermédiaire du premier bus (22) au dispositif de commande (4a, 4b, 4c, 4a') associé au code de test concerné, dans lequel le deuxième code de test transmis au dispositif de commande (4a, 4b, 4c, 4a') concerné est comparé au deuxième code de test stocké dans la mémoire de données (7a, 7b, 7c, 7a') dudit dispositif de commande (4a, 4b, 4c, 4a'), et dans lequel la machine (3a, 3b, 3c, 3a') associée au dispositif de commande (4a, 4b, 4c, 4a') concerné est amenée dans un état de fonctionnement non sécurisé lorsque les deux deuxièmes codes de test concordent.

7. Procédé selon l'une des revendications 1 à 6, dans lequel ladite au moins une machine (3a, 3b, 3c, 3a') est un actionneur, en particulier un moteur électrique.
